# EUROPÄISCHE PATENTSCHRIFT

(11) **EP 0 722 522 B1**
(45) Veröffentlichungstag und Bekanntmachung des Hinweises auf die Patenterteilung: **22.10.1997**
(21) Anmeldenummer: 94923650.9
(22) Anmeldetag: 13.08.1994
(51) Int. Cl.: D21G 1/02, F16C 13/00

(54) **VERFAHREN ZUM BETRIEB EINER WALZE UND ENTSPRECHENDE WALZE**
PROCESS FOR OPERATING A ROLLER AND SUITABLE ROLLER
PROCEDE PERMETTANT DE FAIRE FONCTIONNER UN CYLINDRE, ET CYLINDRE CORRESPONDANT

(30) Priorität: 08.10.1993 DE 4334347
(43) Veröffentlichungstag der Anmeldung: 24.07.1996
(73) Patentinhaber: Eduard Küsters Maschinenfabrik GmbH & Co. KG, 47805 Krefeld (DE)
(72) Erfinder: Küsters, Karl-Heinz, D-47804 Krefeld (DE)
(74) Vertreter: Palgen, Peter, Dr. Dipl.-Phys.
(86) Internationale Anmeldenummer: DE9400929
(87) Internationale Veröffentlichungsnummer: WO9510660

(56) Entgegenhaltungen:
- DE-A- 3 625 802
- DE-B- 2 744 524
- DE-C- 3 445 890
- GB-A- 2 105 000

## Beschreibung

Die Erfindung bezieht sich auf ein Verfahren zum Betrieb einer Walze nach dem Oberbegriff des Anspruchs 1 und eine entsprechende Walze.

Eine derartige Walze ist aus der DE-PS 34 45 890 bekannt. Die bekannte Walze ist für den Betrieb mit Hydrauliköl bestimmt, d.h. es sind die beiden Längskammern mit Hydrauliköl gefüllt, wobei die auf der Seite des Walzspalts gelegene Längskammer den höheren Druck aufweist.

Ein bekannter Nachteil nicht nur dieser sondern auch anderer Durchbiegungsausgleichswalzen besteht darin, daß sie bei hohen Geschwindigkeiten einen hohen inneren Verbrauch an Antriebsleistung zeigen. Gemeint sind hiermit Anteile der Antriebsleistung, die nicht in die Verformung des Produkts gehen, sondern die die Walze selbst verbraucht und die auch entstünden, wenn die Walze ohne Produkt umliefe.

Bei den sogenannten schwimmenden Walzen, wozu auch die gattungsgemäße Walze gehört, ist der Leistungsverlust durch die Reibung an den Längs- und Endquerdichtungen vergleichsweise gering. Der Hauptanteil liegt in den Verlusten durch innere Flüssigkeitsreibung, die durch die Umlenkung des am Innenumfang der Hohlwalze mitgeführten Ölfilms an den Längsdichtungen zustande kommt. Besonders bei höheren Geschwindigkeiten machen diese auf der Flüssigkeitsreibung beruhenden Verluste den weitaus größten Teil des Leistungsbedarfs aus.

Der Erfindung liegt die Aufgabe zugrunde, eine Walze der gattungsgemäßen Art so zu betrieben bzw. auszugestalten, daß die inneren Leistungsverluste verringert sind.

Diese Aufgabe wird in ihren verfahrensmäßigen Aspekt durch die in Anspruch 1 wiedergegebene Erfindung gelöst. Durch die Verwendung eines gasförmigen Druckmittels in den Längskammern ist die innere Reibung bei der Umlenkung der am Innenumfang der Hohlwalze mitgeführten Druckmittelschicht und der dadurch erzeugten Turbulenz wesentlich geringer. Das gasförmige Druckmedium stellt jedoch höhere Anforderungen an die Abdichtung der Längskammern, denen durch die Füllung der Räume zwischen den Längsdichtungen und Endquerdichtungen mit einer Sperrflüssigkeit nachgekommen wird. Damit das Druckgas nicht in diese Räume eindringen kann, ist der Druck der Sperrflüssigkeit höher als der Druck des Druckgases, d.h. insbesondere höher als der Druck in der druckwirksamen Längskammer auf der Seite des Walzspalts. Durch diese Situation wird ein kleiner Anteil der Sperrflüssigkeit ständig unter den Längs- und Endquerdichtungen hindurch am Innenumfang der Hohlwalze in die Längskammern übertreten, was im Laufe der Zeit zu einer Füllung der Längskammern mit Sperrflüssigkeit führen würde. Da dieser Fall nicht eintreten darf, wird die eingedrungene Sperrflüssigkeit fortlaufend entfernt, so daß die reine Gasfüllung der Längskammern aufrechterhalten wird.

Die Verwendung von Druckgas als Druckmittel ist an durchbiegungssteuerbaren Walzen für sich genommen bekannt. Ein Beispiel dieser Art geht aus der DE-PS 36 25 802 hervor, die eine umlaufende Hohlwalze mit undrehbarem Querhaupt zum Gegenstand hat, bei der der gesamte Zwischenraum zwischen Querhaupt und Innenumfang der Hohlwalze rundum, d.h. ohne Längsdichtungen mit einem Druckgas füllbar ist und an einzelnen Stellen durch radiale Druckstempel Zonen ausgespart werden können, in denen der Gasdruck nicht herrscht. Auf diese Weise kommt überhaupt erst eine einseitige Kraftwirkung zustande. Da hierbei aber keine Längsdichtungen vorhanden sind, die unterschiedliche Drücke aufweisende Längskammern voneinander abdichten, ist auch das Dichtungsproblem nicht bzw. nicht im vergleichbaren Ausmaß gegeben.

Ein anderes Beispiel für eine luftgestützte Walze ist Gegenstand der DE-OS 41 03 799, die eine stempelgestützte durchbiegungssteuerbare Walze als Andrückwalze an einem Folienwickler zum Gegenstand hat. Einzelheiten der Ausbildung der Luftabstützung sind nicht geschildert.

Es kann sich gemäß Anspruch 2 empfehlen, daß der druckwirksamen Längs kammer zugeleitete Druckgas zu temperieren, d.h. aufzuheizen oder insbesondere zu kühlen. Letzteres kommt in Betracht, wenn mit sehr hohen Geschwindigkeiten gefahren werden soll. Dabei heizt sich auch ein Druckgas trotz der gegenüber einer Druckflüssigkeit sehr viel geringeren inneren Reibung auf, was die gewünschte Behandlungstermperatur verschieben kann.

Die Ansprüche 3 und 5 geben den apparativen Aspekt der Erfindung wieder.

In der Zeichnung ist ein Ausführungsbeispiel der Erfindung schematisch dargestellt.
Fig. 1 zeigt Querschnitte durch die erfindungsgemäße Walze, und zwar in der rechten Hälfte im Innern der Walze (in Längsrichtung derselben gesehen), in der linken Hälfte im Endbereich, so daß der mit dem Querhaupt verbundene umdrehbare Träger für die Endquerdichtungen sichtbar ist;
Fig. 2 zeigt eine vergrößerte Teilansicht aus der rechten Hälfte der Fig. 1.
Die Walze 100 umfaßt ein feststehendes Querhaupt 1, um welches eine Hohlwalze 2 umläuft. Das Querhaupt 1 beläst zum Innenumfang 3 der Hohlwalze 2 ringsum einen Zwischenraum 4, so daß sich das Querhaupt beim Auftreten einer Belastung im Walzspalt innerhalb der Hohlwalze 2 durchbiegen kann, ohne an deren Innenumfang anzustoßen.

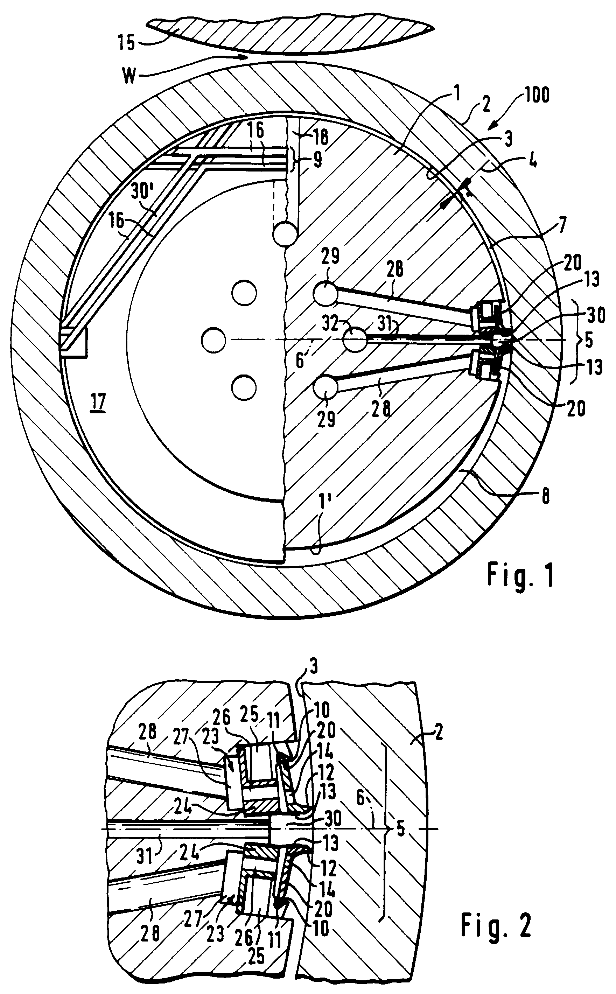

Die durch den Liniendruck im Walzspalt bedingten Kräfte werden von der Hohlwalze 2 über ein Druckgas auf das Querhaupt 1 übertragen, welches sich unter der Wirkung dieser Kräfte durchbiegt und auf diese Weise die das Gleichgewicht herbeiführenden Gegenkräfte erzeugt. In dem in Fig. 1 gezeigten Ausführungsbeispiel sind die Gegenwalze 15 und der Walzspalt W oben gelegen, so daß sich das Querhaupt 1 nach unten durchbiegen wird. Aus diesem Grunde ist das Querhaupt 1 an seiner Unterseite 1' etwas abgeplattet, um Platz für diese Durchbiegung zu schaffen, wie aus der Fig. 1 zu ersehen ist. Das Druckgas befindet sich in einer in dem Zwischenraum 4 gebildeten halbzylinderschalenförmigen Längskammer 7, die durch den Zwischenraum 4 in Achsrichtung begrenzende Endquerdichtungen 9 auf einem mit dem Querhaupt 1 verbundenen Endquerdichtungsträger 17 sowie durch auf beiden Seiten des Querhauptes 1 angeordnete Längsdichtungen abgeteilt ist, von denen die in der Zeichnung dargestellte Längsdichtung der in Fig. 1 rechten Seite als Ganzes mit 5 bezeichnet ist. Eine entsprechende Längsdichtung befindet sich auf der gemäß Fig. 1 linken Seite des Querhauptes 1. Die beiden Längsdichtungen 5 liegen in dem Ausführungsbeispiel in einer Verbindungsebene 6, die eine zur Wirkebene der Walze, d.h. der Verbindungsebene der Achsen der Walze 100 und der Gegenwalze 15, senkrechte Meridianebene ist.

Durch die Endquerdichtungen 9 und die Längsdichtungen 5 entstehen in dem Ausführungsbeispiel zwei Längskammern 7 und 8, von denen in dem Ausführungsbeispiel die Längskammer 7 über die Zuleitung 18 mit Druckgas füllbar ist, während die Längskammer 8 keine eigene Druckgaszuleitung hat.

Die jeweilige Längs dichtung 5 und Endquerdichtung 9 bestehen jeweils aus zwei einzelnen Dichtungselementen 20,20 bzw. 16,16. Die Längsdichtung 5 ist zu der Verbindungsebene 6 symmetrisch ausgebildet. Nahe der Verbindungsebene 6 sind zu deren beiden Seiten mit geringem Abstand von dieser in die Umfangsfläche des Querhauptes 1 Längsausnehmungen 23 gestuft rechteckigen Querschnitts ausgefräst, deren Mittelebene leicht gegen die Verbindungsebene 6 geneigt ist und mit dieser einen Winkel von etwa 5° bildet. In dem breiteren äußeren Teil der Längsausnehmungen 23 sind Stützleisten 24 im wesentlichen rechteckigen Querschnitts angeordnet, die durch nicht runde um Querachsen drehbare Klemmstücke 25 gegen die der Verwendungsebene 6 zugewandte Flanke der Längsausnehmung 23 gepreßt und auf diese Weise festgeklemmt werden. An der der Verbindungsebene 6 abgelegen äußeren Ecke des Querschnitts besitzen die Stützleisten 24 einen Ansatz mit einer gegen die Verbindungsebene 6 hin offenen Hinterschneidung 10, in die jeweils eines der beiden die Längsdichtung 5 bildenden Dichtungselemente in Gestalt der Dichtleisten 20 mit einem ihrer Längsränder 11 von der Verbindungsebene 6 herf eingreift. Die Dichtleisten 20 besitzen etwa L-förmigen Querschnitt, und der Längsrand 11 ist am freien Ende des längeren Schenkels des "L" gebildet. Von dem anderen, der Verbindungsebene 6 benachbarten Ende des längeren Schenkels des "L" lädt der kürzere Schenkel des "L" fast radial gegen den Innenumfang 3 der Hohlwalze 2 aus. Der dort anliegende andere Längsrand 12 der Dichtleisten 20 ist am freien Ende des kürzeren Schenkels des "L" gebildet. Der kürzere Schenkekl ist abgeschrägt, so daß der Längsrand 12 eine Rakelkante bildet. Die Dichtleisten 20 sind zur Verbindungsebene 6 symmetrisch angeordnet und werden durch zwei Federstreifen 13 federnd in ihrer Lage und in Anlage an dem Innenumfang 3 gehalten, die "unter" der Stützleiste 24 eingeklemmt sind und frei im wesentlichen radial nach außen vorkragen und mit ihren freien Rand an der Außenseite des kürzeren Schenkel des "L" anliegen.

Die Dichtleisten 20 weisen ebenso wie die Stützleiste 24 über ihre Länge verteilte durchgehende Querbohrungen 14 bzw. 26 auf, die in einen hinter den Stützleisten 24 durch den engeren Teil 27 der Längsausnehmungen 23 gebildeten, über die Länge der Längsdichtungen 5 durchgehenden Ölabführraum münden, der jeweils in Verbindung mit einem oder mehreren über die Länge verteilten, in Querrichtung verlaufenden Ableitkanälen 28 steht, die wiederum in eine Längsbohrung 29 des Querhauptes 1 führen, durch die Sperrflüssigkeit nach außen abgeführt werden kann.

Der Abstand der rakelnden Längskanten 12 der Dichtleisten 20 von der Verbindungsebene 6 beträgt in der Praxis etwa 5 bis 20 mm.

Es ist zwischen den Dichtleisten 20 ein Raum 30 gebildet, in den zwischen den Längsausnehmungen 23 verlaufende Radialbohrungen 31 münden, die von einer Längsbohrung 32 aus mit Sperrflüssigkeit versorgt werden.

Die Dichtleisten 20 bestehen aus einer geeigneten Bronzelegierung, die mit dem Stahl des Innenumfangs 3 der Hohlwalze 2 eine günstige Gleitpaarung bildet.

Die Endquerdichtungen 9 sind in entsprechender Weise aus je zwei einander parallelen, Querabstand aufweisenden Dichtleisten 16 gebildet, die hier allerdings einen Rechteckquerschnitt aufweisen, in Achsrichtung in Rechtecknuten in dem Endquerdichtungsträger 17 eingreifen und gegen eine mit der Hohlwalze 2 umlaufende, nicht dargestellte Ringscheibe dichtend anliegen. Zwischen den Dichtleisten 16 ist ein mit Sperrflüssigkeit füllbarer Raum 30' gebildet.

In dem Ausführungsbeispiel sindd Endquerdichtungen 9 nur für die obere Längskammer 7 vorgesehen, die auf der Seite der Gegenwalze 15 angeordnet ist und über die Zuleitung 18 mit Druckgas versorgt wird. Es ist aber auch möglich, Endquerdichtungen für die untere Längskammer 8 vorzusehen, z.B. wenn die Walze 100 wahlweise gemäß Fig. 1 nach oben oder unten arbeiten soll.

Soll die Walze einen gemäß Fig. 1 nach oben wirkenden Liniendruck in dem Walzspalt zwischen der Walze 100 und der Gegenwalze 15 erzeugen, so wird der Längskammer 7 durch die Zuleitung 18 Druckgas unter einem entsprechenden Druck zugeführt. Der Druck wirkt gegen den Innenumfang 3 der Hohlwalze 2 in deren oberer Hälfte und ergibt eine gegen den Walzspalt W gerichtete Linienkraft in demselben. Das Druckgas "stützt" sich andererseits gegen die Oberseite des Querhaupts 1 ab, welches sich unter diesen Kräften in der bereits beschriebenen Weise nach unten durchbiegt. Der in der Längs kammer 7 herrschende pneumatische Druck wirkt auf die in Fig. 1 und 2 gezeigte Dichtleiste 20 allenfalls so, daß diese vom Innenumfang 3 der Hohlwalze 2 abgehoben wird. Auch wenn durch die Bohrungen 14 in dem längeren Schenkel des "L" Druckgas auch auf die Rückseite der oberen Dichtleiste 20 gelangt und somit ein gewisser Druckausgleich stattfindet, ist jedenfalls wegen der Anlage des Federstreifens 30 an der Unterseite des kürzeren Schenkels des "L" eine gewisse Abdichtung gegeben und dadurch die Wirkfläche des in der Längskammer 7 herrschenden Drucks auf der Oberseite der oberen Dichtleiste 20 größer als auf der Unterseite. Es sei bemerkt, daß sich die Federstreifen 13 ebenso wie die Dichtleisten 20 über die gesamte Länge der Längskammern 7,8 ohne Unterbrechung erstrecken.

Wenn also die obere Längskammer 7 die "druckwirksame" Längskammer ist, ist die gemäß den Fig. 1 und 2 untere Dichtleiste 20 die "aktive" Dichtleiste. Es muß dafür gesorgt werden, daß sie um so fester mit dem Längsrand 12 an den Innenumfang 3 der Hohlwalze 2 angedrückt wird, je höher der Druck in der Längskammer 7 wird. Hierzu wird in dem Raum 30 zwischen den Dichtleisten 20 durch die Sperrflüssigkeit ein Druck erzeugt, der mit dem Druck in der Längskammer 7 ansteigt und in jedem Fall größer als der Druck in der Längskammer 7 ist. Bei der gezeigten Anordnung läßt dieser Druck der Sperrflüssigkeit die untere Dichtleiste 20 um ihren Längsrand 11 in der Hinterschneidung 10 im Uhrzeigersinn kippen und drückt dadurch die untere Dichtleiste 20 entsprechend fest gegen den Innenumfang 3 der umlaufenden Hohlwalze 2 an, wodurch die Dichtkraft stets dem Druck in der Längskammer 7 angepaßt wird. Der Druck der Sperrflüssigkeit in dem Raum 30 kommt auch der oberen Dichtleiste 20 zugute, die dadurch eine Vorabdichtung leistet. Die Sperrflüssigkeit in dem Raum 30 wird durch die Radialbohrungen 31 und die Längsbohrung 32 geliefert. Die Sperrflüssigkeit in dem Raum hat wegen ihrer gegenüber dem Druckgas viel größeren Viskosität eine entsprechend größere Dichtwirkung an den Dichtleisten 20 zur Folge, so daß die gezeigte Anordnung auch bei erhöhten Drücken des Druckgases in der Längskammer 7 noch funktioniert, ohne daß zuviel Leckverluste an Druckgas auftreten.

Wegen der Haftung der Sperrflüssigkeit am Innenumfang 3 der an den Räumen 30 vorbeilaufenden Hohlwalze 2 und gefördert durch den erhöhten Druck der Sperrflüssigkeit wird ständig ein gewisser Anteil der Sperrflüssigkeit unter den Dichtleisten 20 hindurch in die Längskammern 7,8 ausgeschleppt. Dies würde normalerweise dazu führen, daß sich die Längskammern 7,8 nach einiger Betriebsdauer mit Öl füllen, wodurch die bereits erwähnten hohen Verluste an Antriebsleistung durch die innere Reibung der Flüssigkeit aufträten. Um dies zu verhindern, sind in den Dichtleisten 20 und den Stützleisten 24 die Querbohrungen 14 bzw. 26 vorgesehen, die in die Ableitkanäle 28 führen. Es bildet sich beim Umlauf der Hohlwalze 2, nämlich an derjenigen Dichtleiste 20, gegen die der Innenumfang 3 der Hohlwalze 2 anläuft, durch die sich dort ansammelnde, von dem Innenumfang 3 abgerakelte Sperrflüssigkeit ein Flüssigkeitsstau mit einem gewissen Innendruck, der dazu führt, daß die in die Längskammern 7,8 gelangte und von den Dichtleisten 20 abgerakelte Sperrflüssigkeit ständig durch die Ableitkanäle 28 hinausgetrieben wird, so daß sich die Längskammern 7,8 nicht füllen können.

Das durch die Zuleitung 18 herangeführte Druckgas kann vor dem Eintritt in dieselbe durch einen Wärmetauscher geleitet und dort temperiert werden. Dies kommt insbesondere in Betracht, wenn die Walze 100 mit hohen Geschwindigkeiten betrieben wird und der Erwärmung des Druckgases durch seine innere Reibung entgegengewirkt werden muß.

## Patentansprüche

1. Verfahren zum Betrieb einer Walze (100) mit einer den arbeitenden Walzenumfang bildenden umlaufenden Hohlwalze und einem diese der Länge nach durchgreifenden, ringsum Abstand zum Innenumfang (3) der Hohlwalze (2) belassenden undrehbaren Querhaupt (1), auf welches an den aus der Hohlwalze (2) hervorstehenden Enden äußere Kräfte aufbringbar sind, und mit in dem Zwischenraum (4) zwischen der Hohlwalze (2) und dem Querhaupt (1) gebildeten Längskammern (7,8), von denen mindestens die auf der Seite des Walzspalts (W) gelegene Längskammer (7) eine Zuleitung (18) für ein fluides Druckmedium aufweist, auf welchem sich die Hohlwalze (2) an dem Querhaupt (1) abstützt, und die durch eine am Querhaupt (1) angebrachte Dichtungsanordnung (5,9) abgeteilt sind, die an den einander in Längsrichtung gegenüberliegenden Enden der Längskammern (7,8) vorgesehene Endquerdichtungen (9) aus jeweils zwei einander parallelen Dichtleisten (16,16) sowie längs des Querhauptes (1) und der Hohlwalze (2) zu beiden Seiten der Wirkebene der Walze (100) sich erstreckende Längsdichtungen (5) aufweist, von denen jede zwei gleiche, einander parallele, in Umfangsrichtung eng benachbarte, zur Verbindungsebene (6) der beiderseitigen Längsdichtungen (5) spiegelbildlich angeordnete Dichtleisten (20,20) umfaßt, die mit einem Längsrand (11) in eine Längshinterschneidung (10) am Querhaupt (1) eingreifen, mit dem anderen Längsrand (12) gegen den Innenumfang (3) der Hohlwalze (2) anliegen und von denen eine schräg gegen die druckwirksame Längskammer (7) gerichtet ist, wobei der Raum (30) zwischen den Dichtleisten (20,20) einer Längsdichtung (5) mit dem fluiden Druckmedium unter einem wählbaren Druck füllbar ist, **dadurch gekennzeichnet**, daß die Längskammern (7,8) mit Druckgas und die Räume (30,30') zwischen den Dichtleisten (20,20) einer Seite bzw. (16,16) jedes Endes mit einer als Sperrflüssigkeit wirkenden Druckflüssigkeit von einem den Druck des Druckgases übertreffenden Druck gefüllt und in die Längskammern (7,8) eingedrungene Sperrflüssigkeit fortlaufend entfernt werden.

2. Verfahren nach Anspruch, **dadurch gekennzeichnet**, daß das Druckgas vor der Einleitung in die Längskammer (7) temperiert wird.

3. Walze (100) mit einer den arbeitenden Walzenumfang bildenden umlaufenden Hohlwalze und einem diese der Länge nach durchgreifenden, ringsum Abstand zum Innenumfang (3) der Hohlwalze (2) belassenden undrehbaren Querhaupt (1), auf welches an den aus der Hohlwalze (2) hervorstenden Enden äußere Kräfte aufbringbar sind, und mit in dem Zwischenraum (4) zwischen der Hohlwalze (2) und dem Querhaupt (1) gebildeten Längskammern (7,8), von denen mindestens die auf der Seite des Walzspalts (W) gelegene Längskammer (7) eine Zuleitung (18) für ein fluides Druckmedium aufweist, auf welchem sich die Hohlwalze (2) an dem Querhaupt (1) abstützt, und die durch eine am Querhaupt (1) angebrachte Dichtungsanordnung (5,16) abgeteilt sind, die an den einander in Längsrichtung gegenüberliegenden Enden der Längskammern (7,8) vorgesehene Endquerdichtungen (9) aus jeweils zwei einander parllelen Dichtleitsten (16,16) sowie längs des Querhauptes (1) und der Hohlwalze (2) zu beiden Seiten der Wirkebene der Walze (100) sich erstrekkende Längsdichtungen (5) aufweist, von denen jede zwei gleiche, einander parallele, in Umfangsrichtung eng benachbarte, zur Verbindungsebene (6) der beiderseitigen Längsdichtungen (5) spiegelbildlich angeordnete Dichtleisten (20,20) umfaßt, die mit einem Längsrand (11) in eine Längshinterschneidung (10) am Querhaupt (1) eingreifen, mit dem anderen Längsrand (12) gegen den Innenumfang (3) der Hohlwalze (2) anliegen und von denen eine schräg gegen die druckwirksame Längskammer (7) gerichtet ist, wobei der Raum (30) zwischen den Dichtleisten (20,20) einer Längsdichtung (5) mit dem fluiden Druckmedium unter einem wählbaren Druck füllbar ist, **dadurch gekennzeichnet**, daß mindestens die auf der Seite des Walzspalts (w) gelegene Längskammer (7) an einer Druckgasquelle und die Räume (30,30') zwischen den Dichtleisten (20,20) einer Seite und (16,16) jedes Endes an eine Sperrflüssigkeitsquelle von einem den Druck in der Längskammer (7) übertreffenden Druck anschließbar sowie eine Einrichtung zur Entfernung in die Längskammern (7,8) eingedrungener Sperrflüssigkeit vorgesehen sind.

4. Walze nach Anspruch 3, **dadurch gekennzeichnet**, daß die Einrichtung zur Entfernung der Sperrflüssigkeit aus den Längskammern (7,8) in diesen dicht vor den Längsdichtungen (5), gegen die die Hohlwalze (2) anläuft, mündende Ableitkanäle (14,26,27,28,29) umfassen.

5. Walze nach Anspruch 3 oder 4, **dadurch gekennzeichnet**, daß ein Wärmetauscher vorgesehen ist, durch den das Druckgas vor der Einleitung in die Längskammer (7) hindurchleitbar ist.

## Claims

1. A method of operating a roll (100) comprising a rotating roll shell constituting the working periphery of the roll and a non-rotatable beam (1) which extends longitudinally through the roll shell (2) and leaves an annular space between it and the inner periphery (3) thereof, external forces being adapted to be applied to the ends of the beam projecting from the roll shell (2), longitudinal chambers (7, 8) being formed in the space (4) between the roll shell (2) and the beam (1), at least the longitudinal chamber (7) on the same side as the roll nip (W) having a feed pipe (18) for a fluid pressure medium on which the roll shell (2) abuts against the beam (1), the chambers being separated by a sealing arrangement (5, 9) disposed on the beam (1) and comprising end cross-seals (9) each made up of two parallel sealing strips (16, 16) provided on the ends of the longitudinal chambers (7, 8) opposite one another in the longitudinal direction and longitudinal seals (5) extending along the beam (1) and the roll shell (2) on both sides of the operating plane of the roll (100), each longitudinal seal comprising two similar parallel sealing strips (20, 20) closely adjoining one another in the peripheral direction and disposed with mirror symmetry relative to the plane (6) connecting the longitudinal seals (5) on the two sides, a longitudinal edge (11) of each strip (20, 20) engaging in a longitudinal undercut (10) on the beam(1) whereas the other longitudinal edge (12) abut the inner periphery (3) of the roll shell (2), one edge extending at an angle towards the longitudinal chamber (7) at the operative pressure, the space (30) between the sealing strips (20, 20) of a longitudinal seal (5) being fillable with the fluid pressure medium at a selectable pressure, characterised in that the longitudinal chambers (7, 8) are filled with pressure gas and the spaces (30, 30') between the sealing strips (20, 20) on one side or the sealing strips (16, 16) at each end is filled with a pressure liquid serving as a sealing liquid and at a pressure greater than the pressure of the pressure gas, and sealing liquid which penetrates into the longitudinal chambers (7, 8) is continuously removed.

2. A method according to the claim, characterised in that the pressure gas temperature is controlled before it is introduced into the longitudinal chamber (7).

3. A roll (100) comprising a rotating roll shell constituting the working periphery of the roll and a non-rotatable beam (1) which extends longitudinally through the roll shell (2) and leaves an annular space between it and the inner periphery (3) thereof, external forces being adapted to be applied to the ends of the beam projecting from the roll shell (2), longitudinal chambers (7, 8) being formed in the space (4) between the roll shell (2) and the beam (1), at least the longitudinal chamber (7) on the same side as the roll nip (W) having a feed pipe (18) for a fluid pressure medium on which the roll shell (2) abuts against the beam (1), the chambers being separated by a sealing arrangement (5, 16) disposed on the beam (1) and comprising end cross-seals (9) each made up of two parallel sealing strips (16, 16) provided on the ends of the longitudinal chambers (7, 8) opposite one another in the longitudinal direction and longitudinal seals (5) extending along the beam (1) and the roll shell (2) on both sides of the operating plane of the roll (100), each longitudinal seal comprising two similar parallel sealing strips (20, 20) closely adjoining one another in the peripheral direction and disposed with mirror symmetry relative to the plane (6) connecting the longitudinal seals (5) on the two sides, a longitudinal edge (11) of each strip (20, 20) engaging in a longitudinal undercut (10) on the beam (1) whereas the other longitudinal edge (12) abuts the inner periphery (3) of the roll shell (2), one edge extending at an angle towards the longitudinal chamber (7) at the operative pressure, the space (30) between the sealing strips (20, 20) of a longitudinal seal (5) being fillable with the fluid pressure medium at a selectable pressure, characterised in that at least the longitudinal chamber (7) on the same side as the roll nip (W) is connectable to a source of pressure gas and the spaces (30, 30') between the sealing strips (20, 20) on one side and the sealing strips (16, 16) at each end are connectable to a source of sealing liquid at a pressure greater than the pressure in the longitudinal chamber (7), and a device is provided for removing sealing liquid which has penetrated into the longitudinal chambers (7, 8).

4. A roll according to claim 3, characterised in that the device for removing the sealing liquid from the longitudinal chambers (7, 8) comprises discharge ducts (14, 26, 27, 28, 29) which open into the longitudinal chambers closely in front of the longitudinal seals (5) against which the roll shell (2) runs.

5. A roll according to claim 3 or 4, characterised in that a heat exchanger is provided and the pressure gas can be conveyed through it before being introduced into the longitudinal chamber (7).

## Revendications

1. Procédé pour faire fonctionner un cylindre (100) avec un cylindre creux qui tourne et constitue le pourtour de travail et avec une traverse (1) passant à travers et venant en prise avec ledit cylindre sur sa longueur, traverse qui ne peut pas tourner et ménage tout autour un écartement par rapport au pourtour intérieur (3) du cylindre creux (2), et sur laquelle on peut appliquer des forces extérieures aux extrémités qui font saillie hors du cylindre creux, et avec des chambres longitudinales (7, 8) formées dans l'espace intermédiaire compris entre le cylindre ceux (2) et la traverse (1), chambres à partir desquelles la chambre longitudinale (7) au moins, qui se trouve sur le côté de la fente du cylindre (W) présente une conduite d'amenée pour un agent fluide sous pression, au moyen duquel le cylindre creux (2) prend appui sur la traverse (1), ces chambres étant subdivisées par un système d'étanchéité (5, 9) disposé sur la traverse (1), système qui présente des garnitures d'étanchéité (9) terminales, prévues aux extrémités des chambres longitudinales (7, 8), qui se font vis à vis l'une l'autre dans le sens longitudinal, et se composent de respectivement deux entretoises d'étanchéité (16, 16) parallèles l'une à l'autre ainsi que de garnitures d'étanchéité longitudinales (5), qui s'étendent le long de la traverse (1) et du cylindre creux (2) des deux côtés du plan opérationnel du cylindre (100), chacune des garnitures comprenant deux entretoises d'étanchéité identiques (20, 20), parallèles l'une à l'autre, étroitement voisines dans le sens périphérique, disposées de façon symétrique par rapport au plan de liaison (6) des garnitures d'étanchéité (5) longitudinales situées des deux côtés, entretoises d'étanchéité (20, 20) qui viennent en prise avec un bord longitudinal (11) dans une contre-dépouille longitudinale (10) sur la traverse (1), reposent par l'autre bord longitudinal (12) contre le pourtour intérieur (3) du cylindre creux (2) et dont l'une est dirigée obliquement contre la chambre longitudinale (7) opérant sous pression, l'espace (30) compris entre les entretoises d'étanchéité (20, 20) d'une garniture d'étanchéité longitudinale (5) pouvant être rempli de l'agent fluide sous pression sous une pression que l'on peut choisir,
caractérisé en ce que
les chambres longitudinales (7, 8) sont remplies de gaz sous pression et les espaces (30, 30'), compris entre les entretoises d'étanchéité (20, 20) d'un côté ou entre les entretoises d'étanchéité (16, 16) de chaque extrémité sont remplis d'un liquide sous pression opérant comme liquide de barrage avec une pression qui surpasse la pression du gaz sous pression et en ce qu'on enlève de façon continue du liquide de blocage introduit sous pression dans les chambres longitudinales (7, 8).

2. Procédé selon la revendication 1,
caractérisé en ce que
l'on met en équilibre la température du gaz sous pression avant de l'introduire dans la chambre longitudinale (7).

3. Cylindre (100) avec un cylindre creux, qui tourne, et constitue le pourtour de travail et avec une traverse (1) passant à travers et venant en prise avec ledit cylindre sur sa longueur, traverse qui ne peut pas tourner et ménage tout autour un écartement par rapport au pourtour intérieur (3) du cylindre creux (2), et sur laquelle on peut appliquer des forces extérieures aux extrémités qui font saillie hors du cylindre creux, et avec des chambres longitudinales (7, 8) formées dans l'espace intermédiaire compris entre le cylindre ceux (2) et la traverse (1), chambres à partir desquelles la chambre longitudinale (7) au moins, qui se trouve sur le côté de la fente du cylindre (W) présente une conduite d'amenée pour un agent fluide sous pression, au moyen duquel le cylindre creux (2) prend appui sur la traverse (1), ces chambres étant subdivisées par un système d'étanchéité (5, 16) disposé sur la traverse (1), système qui présente des garnitures d'étanchéité (9) terminales, prévues aux extrémités des chambres longitudinales (7, 8), qui se font vis à vis l'une l'autre dans le sens longitudinal, et se composent de respectivement deux entretoises d'étanchéité (16, 16) parallèles l'une à l'autre ainsi que de garnitures d'étanchéité longitudinales (5), qui s'étendent le long de la traverse (1) et du cylindre creux (2) des deux côtés du plan opérationnel du cylindre (100), chacune des garnitures comprenant deux entretoises d'étanchéité identiques (20, 20), parallèles l'une à l'autre, étroitement voisines dans le sens périphérique, disposées de façon symétrique par rapport au plan de liaison (6) des garnitures d'étanchéité (5) longitudinales situées des deux côtés, entretoises d'étanchéité (20, 20) qui viennent en prise avec un bord longitudinal (11) dans une contre-dépouille longitudinale (10) sur la traverse (1), reposent par l'autre bord longitudinal (12) contre le pourtour intérieur (3) du cylindre creux (2) et dont l'une est dirigée obliquement contre la chambre longitudinale (7) opérant sous pression, l'espace (30) compris entre les entretoises d'étanchéité (20, 20) d'une garniture d'étanchéité longitudinale (5) pouvant être rempli de l'agent fluide sous pression sous une pression que l'on peut choisir,
caractérisé en ce que
l'on prévoit au moins la chambre longitudinale (7), qui se trouve sur le côté de la fente du cylindre (W), qui peut être raccordée à une source de gaz sous pression et les espaces (30, 30'), qui sont compris entre les entretoises d'étanchéité (20, 20) d'un côté et les entretoises d'étanchéité (16, 16) de chaque extrémité, qui peuvent être raccordés à une source de liquide de barrage sous une pression qui surpasse la pression dans la chambre longitudinale (7) et l'on prévoit un dispositif qui sert à enlever le liquide de barrage introduit sous pression dans les chambres longitudinales (7, 8).

4. Cylindre selon, la revendication 3,
caractérisé en ce que
le dispositif qui sert à enlever le liquide de barrage des chambres longitudinales (7, 8) comprend des canaux d'évacuation (14, 26, 27, 28, 29) qui débouchent dans ces chambres juste avant les garnitures d'étanchéité longitudinales (5), contre lesquelles tourne le cylindre creux (2).

5. Cylindre selon la revendication 3,
caractérisé en ce que
l'on prévoit un échangeur de chaleur, à travers lequel on peut faire passer le gaz sous pression avant de l'introduire dans la chambre longitudinale (7).
